# EUROPEAN PATENT APPLICATION

(11) **EP 2 682 335 A1**
(43) Date of publication of application: **08.01.2014**
(21) Application number: 13175417.8
(22) Date of filing: 05.07.2013
(51) Int. Cl.: B62M 6/50, B62K 25/02

(54) **Bicycle pedaling force detection apparatus production method and apparatus made with the method thereof**

(30) Priority: 05.07.2012 TW 101124296
(71) Applicant: Solutide Biotech Incorporated, 10491 Taipei (TW)
(72) Inventor: Cheng, Chung-Cheng, 10491 Taipei (TW)
(74) Representative: Lang, Christian

(57) **Abstract**

The present invention discloses a bicycle pedaling force detection apparatus, and its production method. The pedaling force detection apparatus includes: a metal body (10) with a first surface (20) and a second surface (30); with a third surface (40) perpendicular to them; an opening for accepting the wheel axle and at least one joining point attached to the bicycle frame. A strain gauge (70) is placed on the third surface at the optimum position defined by experiments of stress analysis on the metal body (10). The stress on the metal body (10), when a force is applied to pedals of the bicycle, is detected and then transmitted to a microprocessor, generating controlling signals. The signal, consisting pedaling force and pedaling frequency, can be used to control the output power of electric motor which is installed on the bike to assist pedaling. The signal can also be utilized to determine the optimum position of a mechanical gear-set.

## Description

### Field of the Invention

The present invention relates to a rear dropout structure production method for a bicycle with a pedaling force detector and a rear dropout structure produced by the method.

### Background of the Invention

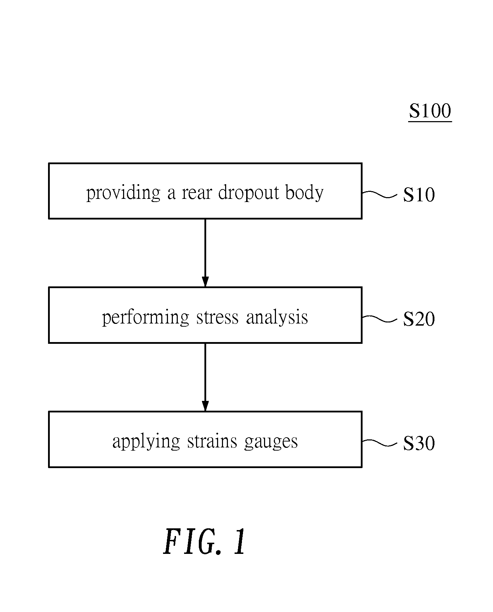

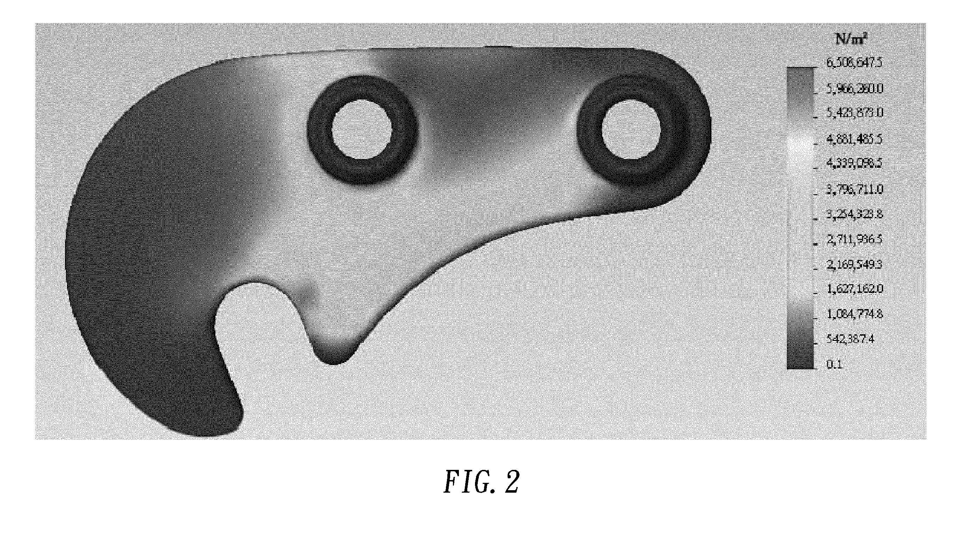

Conventional pedaling force detection methods for use with a bicycle pedaling force detection apparatus mostly entail detecting the pedaling-induced stress imposed upon a bicycle frame by means of a Hall sensing component. US2011 /0040500A1 puts forth a method of measuring a pedaling force, and the method entails focusing measurement positions on a bicycle frame (a rear frame of FIG. 1, a right rear fork of FIG. 2, and paragraphs [0003]∼[0011] of the specification.) However, overall frame noise is too much to perform zero setting and pedaling force-induced deformation occurs to the frame in its entirety; hence, signals pertaining to the resultant stress and a change therein are not always detected by the sensing component affixed to the positions. In addition, the installation of strain gauge is not compatible with the bike-frame production process. Furthermore, movable parts and components are positioned in the vicinity of the detection area, thereby rendering it difficult to perform adjustment and calibration.

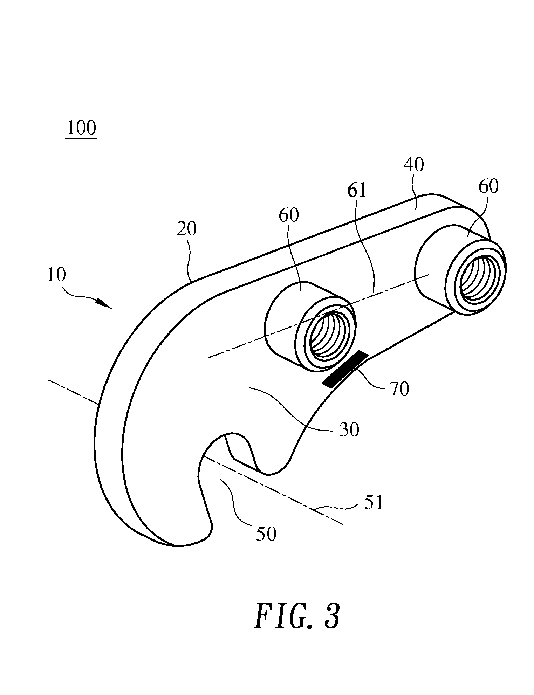

US7814800B2 discloses a pedaling force measurement method. However, the method involves a rear dropout which is formed in the same way as a conventional bicycle pedaling force detection apparatus body is, that is, by flexible cutting (as shown in FIG. 3A through FIG. 8B.) As a result, the method has drawbacks as follows: failure to preclude a pseudo-spring effect; chaotic signals fed back from a sensing device body; plenty of invalid signals and echo signals; and thus deterioration of detection quality and accuracy. To create the necessary displacement that a Hall sensor can detect, the structure of the wheel-holding dropout needs to be weakened, compromising the reliability of rear wheel. These drawbacks are likely to pose safety-related problems to a cyclist.

It should be noted that a bicycle frame body is a factor in the degree of deformation which occurs to the conventional bicycle pedaling force detection apparatus body formed by flexible cutting. Hence, the degree of deformation varies from bicycle to bicycle and is complicated by the materials from which the bicycles are made. Moreover, the direction of deformation is seldom the same as the direction of the tension of a chain, and thus it is difficult to obtain accurate applicable stress-related data.

Accordingly, it is imperative to produce an apparatus which is easy to operate and conducive to accurate measurement of a bicycle pedaling force. This is not only an important topic about improved application of conventional pedaling force detection apparatuses and promotion of cyclist safety, but also is the primary objective of the present invention.

### Summary of the Invention

The present invention relates to a rear dropout structure production method for a bicycle with a pedaling force detector and relates to the rear dropout structure, **characterized in that** the rear dropout body and a strain gauge coupled thereto together enable the detection of a pedaling force and a pedaling frequency to be performed easily and accurately, and a reliable pedelec bike can be produced.

In order to achieve the above and other objectives, the present invention provides a rear dropout structure production method for a bicycle with a pedaling force detector. The rear dropout structure production method comprises the steps of: providing a rear dropout body, the rear dropout body being a block-like structure, having a first surface and a second surface, and having thereon a wheel spindle opening and at least a fixing unit, wherein at least a side surface is defined between the first surface and the second surface; performing stress analysis of the rear dropout body to identify at least a stressed position on the at least a side surface; and applying strains gauges at a stress-indicating position.

In order to achieve the above and other objectives, the present invention further provides a rear dropout structure of a bicycle with a pedaling force detector. The rear dropout structure comprises: a rear dropout body being a block-like structure, having a first surface and a second surface, and having thereon a wheel spindle opening and at least a fixing unit, wherein at least a side surface is defined between the first surface and the second surface; and at least a strain gauge positioned on the at least a side surface.

Implementation of the present invention at least involves the following inventive steps:
1. measuring a pedaling force and a pedaling frequency which serve as the basis of signals for use in precise automatic gear changing and the amount of motor assist;
2. measuring accurately the longitudinal chain tension of the same direction as the advance of the bicycle.

Detailed features and advantages of the present invention are illustrated hereunder with the embodiments thereof to enable persons skilled in the art to gain insight into the technical contents of the present invention, implement the present invention accordingly, and understand readily related objectives and advantages of the present invention in accordance with the disclosure contained in the specification, the claims, and the accompanying drawings.

### Brief Description of the Drawings

The invention as well as a preferred mode of use, further objectives and advantages thereof will be best understood by reference to the following detailed description of illustrative embodiments when read in conjunction with the accompanying drawings, wherein:
FIG. 1 is a schematic view of a rear dropout structure production method for a bicycle with a pedaling force detector according to the embodiment of the present invention;
FIG. 2 is a schematic view of stress analysis of a rear dropout structure of a bicycle with a pedaling force detector according to the embodiment of the present invention;
FIG. 3 is a schematic view of the rear dropout structure of a bicycle with a pedaling force detector according to the embodiment of the present invention;
FIG. 4 is a schematic view of another rear dropout structure of a bicycle with a pedaling force detector according to the embodiment of the present invention; and
FIG. 5 is a schematic view of a rear dropout application structure of a bicycle with a pedaling force detector according to the embodiment of the present invention.

### Detailed Description of the Invention

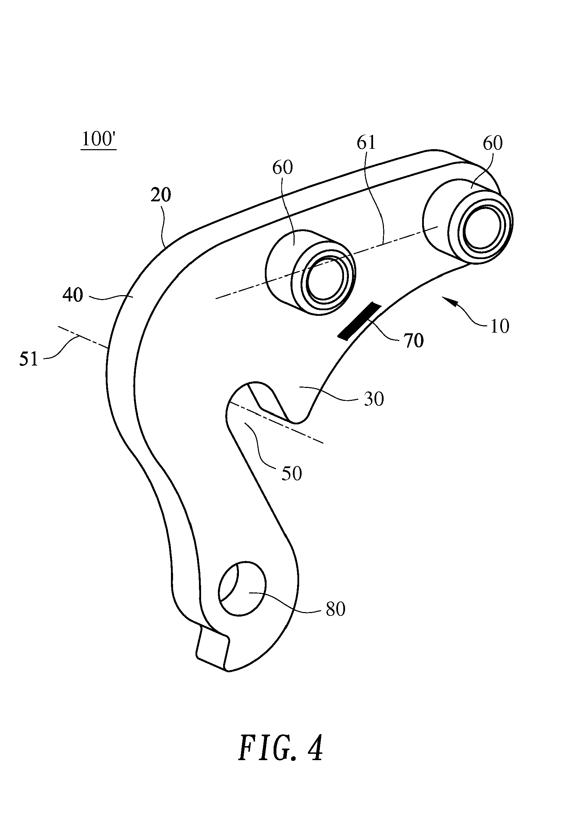

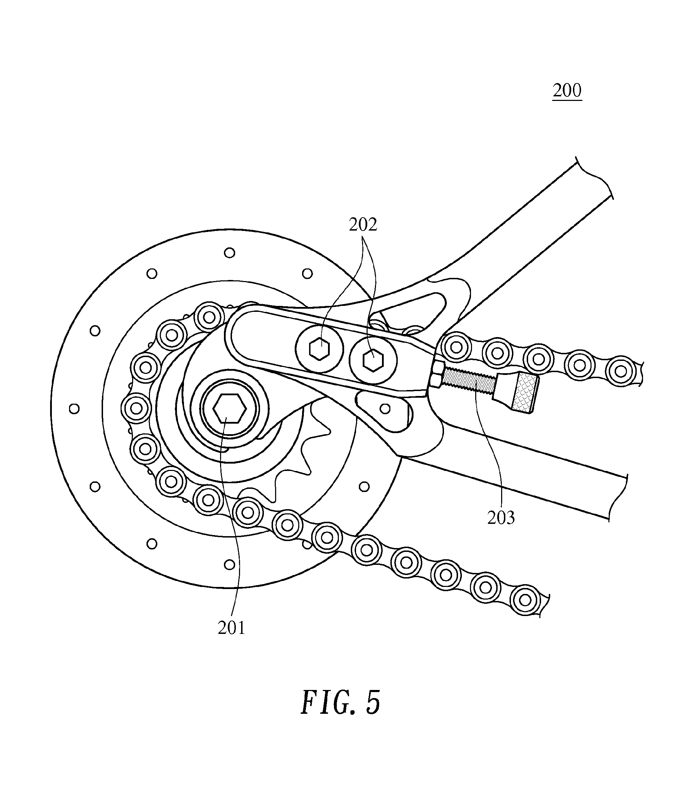

FIG. 1 is a schematic view of a rear dropout structure production method for a bicycle with a pedaling force detector according to the embodiment of the present invention. FIG. 2 is a schematic view of stress analysis of a rear dropout structure of a bicycle with a pedaling force detector according to the embodiment of the present invention. FIG. 3 is a schematic view of the rear dropout structure of a bicycle with a pedaling force detector according to the embodiment of the present invention. FIG. 4 is a schematic view of another rear dropout structure of a bicycle with a pedaling force detector according to the embodiment of the present invention; and FIG. 5 is a schematic view of a rear dropout application structure of a bicycle with a pedaling force detector according to the embodiment of the present invention.

Referring to FIG. 1 and FIG. 3, the present invention provides a rear dropout structure production method S100 for a bicycle with a pedaling force detector and provides the rear dropout structure. The production method S100 comprises the steps of: providing a rear dropout body (step S10); performing stress analysis (step S20); and applying strains gauges (step S30). A rear dropout structure 100 comprises a rear dropout body 10 and at least a strain gauge 70.

In the step of providing a rear dropout body (step S10), the rear dropout body 10 is a block-like structure, such as a metallic block-like structure, which has a first surface 20 and a second surface 30. At least a side surface 40 is defined between the first surface 20 and the second surface 30. The side surface 40 is an outer side surface or an inner side surface. The first surface 20 and the second surface 30 are perpendicular to the side surface 40. The rear dropout body 10 further has a wheel spindle opening 50 and at least a fixing unit 60. A first axis 61 formed from the fixing units 60 is perpendicular to a second axis 51 of a wheel shaft inside the wheel spindle opening 50. The fixing units 60 are each a post fixed to the second surface 30 and adapted to receive a fixing element whereby the rear dropout body 10 is fixed to a frame.

In the step of performing stress analysis (step S20), as shown in FIG. 2 and FIG. 3, the rear dropout body 10 undergoes stress analysis (step S20) to identify at least a stressed position on the side surface 40. A user looks for an optimum position of the side surface 40 in accordance with stress distribution.

In the step of applying strains gauges (step S30), a strain gauge 70 is positioned at a stressed position. As mentioned above, after an optimum position has been identified by stress analysis, the strain gauge 70 thus positioned is capable of sensing better.

Referring to FIG. 3, in the embodiment of the present invention, the rear dropout structure 100 of a bicycle with a pedaling force detector comprises a rear dropout body 10 and at least a strain gauge 70.

The rear dropout body 10 is a block-like structure, such as a metallic block-like structure, and has a first surface 20 and a second surface 30. At least a side surface 40 is defined between the first surface 20 and the second surface 30. The first surface 20 and the second surface 30 are perpendicular to the side surface 40. The side surface 40 is an outer side surface or an inner side surface. The outer side surface lies on the rear dropout body 10. The inner side surface is formed from a through hole which penetrates the first surface 20 and the second surface 30. The rear dropout body 10 further has a wheel spindle opening 50 and two fixing units 60. A first axis 61 formed from the fixing units 60 is perpendicular to the second axis 51 of a wheel shaft inside the wheel spindle opening 50. The fixing units 60 are each a post fixed to the second surface 30 and adapted to receive a fixing element whereby the rear dropout body 10 is fixed to a frame.

The strain gauge 70 can be deposited on positions on the first surface 20 or the side surface 40, as shown in the bright area in FIG.3 and the example position of the strain gauge 70 in FIG.4, the best position chosen is for the largest stress signal. A stress signal detected by the strain gauge 70 is for use in serving a control purpose. It is further feasible to process a stress signal sensed by the strain gauge 70, using an Application Specific Integrated Circuit (ASIC) chip; in so doing, the sensed stress signal is digitalized, such that it is not only easy to store and analyze, but also effective in performing precise control over accelerating the motor and operating automatic speed changing devices.

Referring to FIG. 4, there is shown a schematic view of a rear dropout structure 100' of a bicycle with a pedaling force detector according to the embodiment of the present invention, wherein the rear dropout body 10 has a derailleur retaining hole 80.

Referring to FIG. 5, there is shown a schematic view of a rear dropout application structure 200 of a bicycle of a pedaling force detector according to the embodiment of the present invention. As regards the rear dropout body 10, a rear wheel axle fixing element 201 corresponding in position to the wheel spindle opening 50 is fixed to a rear wheel axle of the bicycle, and rear dropout fixing elements 202 are coupled to a rear support of the bicycle.

A tightness adjustment rod 203 is for use in adjusting the position of the rear dropout body 10 relative to the rear support of the bicycle. This function is especially useful in that, after the bicycle has been operating for a long while, the tightness adjustment rod 203 adjusts the position of the rear dropout body 10 to thereby increase the distance between the rear wheel axle and the rear support of the bicycle, such that the chain is tightened and thus prevented from disconnection.

The embodiments described above are intended only to demonstrate the technical concept and features of the present invention so as to enable a person skilled in the art to understand and implement the contents disclosed herein. It is understood that the disclosed embodiments are not to limit the scope of the present invention. Therefore, all equivalent changes or modifications based on the concept of the present invention should be encompassed by the appended claims.

## Claims

1. A rear dropout structure production method for a bicycle with a pedaling force detector, comprising the steps of:
providing a rear dropout body (10), the rear dropout body (10) being a block-like structure, having a first surface (20) and a second surface (30), and having thereon a wheel spindle opening (50) and at least a fixing unit (60), wherein at least a side surface (40) is defined between the first surface (20) and the second surface (30);
performing stress analysis of the rear dropout body (10) to identify at least a stress measurement position on the at least a side surface (40); and
applying strains gauges (70) at a stressed position.

2. The rear dropout structure production method of claim 1, wherein the rear dropout body (10) is a metallic block-like structure.

3. The rear dropout structure production method of claim 1, wherein the first surface (20) and the second surface (30) are perpendicular to the at least a side surface (40).

4. The rear dropout structure production method of claim 1, wherein the at least a side surface (40) is one of an outer side surface and an inner side surface.

5. The rear dropout structure production method of claim 1, wherein the rear dropout body (10) comprises two fixing units (60) which form a first axis perpendicular to a second axis of a wheel shaft inside the wheel spindle opening (50).

6. The rear dropout structure production method of claim 1, wherein the fixing units (60) are each a post fixed to the second surface (30).

7. A rear dropout structure of a bicycle with a pedaling force detector, the rear dropout structure comprising:
a rear dropout body (10) being a block-like structure, having a first surface (20) and a second surface (30), and having thereon a wheel spindle opening (50) and at least a fixing unit (60), wherein at least a side surface (40) is defined between the first surface (20) and the second surface (30); and
at least a strain gauge (70) positioned on the at least a side surface (40).

8. The rear dropout structure of claim 7, wherein the rear dropout body (10) is a metallic block-like structure.

9. The rear dropout structure of claim 7, wherein the first surface (20) and the second surface (30) are perpendicular to the at least a side surface (40).

10. The rear dropout structure of claim 7, wherein the at least a side surface (40) is one of an outer side surface and an inner side surface .

11. The rear dropout structure of claim 7, wherein the rear dropout body (10) comprises two fixing units (60) which form a first axis perpendicular to a second axis of a wheel shaft inside the wheel spindle opening (50).

12. The rear dropout structure of claim 7, wherein the fixing units (60) are each a post fixed to the second surface (30).
